# EUROPÄISCHE PATENTSCHRIFT

(11) **EP 2 084 788 B1**
(45) Veröffentlichungstag und Bekanntmachung des Hinweises auf die Patenterteilung: **15.09.2010**
(21) Anmeldenummer: 07819080.8
(22) Anmeldetag: 18.10.2007
(51) Int. Cl.: H01R 35/02, B60R 16/023, B60R 25/02

(54) **LENKSTOCKMODUL**
STEERING COLUMN MODULE
MODULE DE COLONNE DE DIRECTION

(30) Priorität: 23.10.2006 DE 102006049796
(43) Veröffentlichungstag der Anmeldung: 05.08.2009
(73) Patentinhaber: Valeo Schalter und Sensoren GmbH, 74321 Bietigheim-Bissingen (DE)
(72) Erfinder: PACHOLIK, Frank, 73732 Esslingen (DE); BOSCH, Jürgen, 86757 Wallerstein (DE); ALBRECHT, Christian, 78467 Konstanz (DE)
(86) Internationale Anmeldenummer: PCT/EP2007/009012
(87) Internationale Veröffentlichungsnummer: WO 2008/049544

(56) Entgegenhaltungen:
- EP-A- 1 182 090
- EP-A- 1 674 343
- DE-A1- 4 129 450
- US-A- 4 886 460

## Beschreibung

Die Erfindung betrifft ein Lenkstockmodul, insbesondere für ein Kraftfahrzeug, mit einem, insbesondere an der Lenksäule eines Fahrzeugs drehfest anordenbaren Stator, mit einem gegenüber dem Stator um eine Drehachse drehbar angeordneten, mit einem Lenkrad koppelbaren Rotor, mit kabelartigen elektrischen Verbindungsmitteln, insbesondere in Form von Flachbandkabeln, zwischen dem Rotor und dem Stator und mit einem aus einer Verriegelungslage in eine Entriegelungslage bringbaren Verriegelungselement zur Verriegelung des Rotors gegenüber dem Stator.

Ein derartiges Lenkstockmodul ist beispielsweise aus der DE 100 35 261 A1 vorbekannt. Das Verriegelungselement wird dabei insbesondere beim Montieren des Lenkrads durch das montierte Lenkrad in seine Entriegelungslage beaufschlagt, so dass eine Verdrehung des Rotors gegenüber dem Stator möglich wird.

Des Weiteren offenbart Dokument EP 1 674 343 A1 alle Merkmale des Oberbegriffs von Anspruch 1.

Der vorliegenden Erfindung liegt die Aufgabe zugrunde, ein Lenkstockmodul der eingangs genannten Art bereitzustellen, bei dem das Verriegelungselement möglichst wenig Bauraum beansprucht.

Diese Aufgabe wird durch ein Lenkstockmodul mit den Merkmalen des Anspruchs 1 gelöst. Dabei ist vorgesehen, dass der Rotor zur Zwangsführung des Verriegelungselement eine kanalartige Zwangsführung mit einen Bogenabschnitt aufweist und dass das zwangsgeführte Verriegelungselement ein dem Lenkrad zugewandtes Betätigungsende sowie ein dem Stator zugewandtes Verriegelungsende aufweist und wenigstens im Bereich des Bogenabschnitts biegeweich ausgebildet ist. Die kanalartige Zwangsführung ist dabei vorteilhafterweise vollständig innerhalb des Rotors. Der Rotor kann dabei insbesondere ringartig ausgebildet sein, wobei die Zwangsführung dann innerhalb der Ringwandung des Rotors angesiedelt sein kann. Durch Vorsehen der kanalartigen Zwangsführung im beziehungsweise am Rotor wird vergleichsweise wenig Bauraum beansprucht. Ferner wird durch das Vorsehen des zwangsgeführten Verriegelungselements ebenfalls kein zusätzlicher Bauraum, insbesondere in radialer Richtung, beansprucht. Dennoch kann eine funktionssichere Verriegelung durch das in der Zwangsführung geführte Verriegelungselement erzielt werden.

Vorteilhafterweise ist die Zwangsführung derart ausgebildet, dass bei mit dem Lenkrad gekoppeltem Rotor das Betätigungsende vom Lenkrad beaufschlagt wird und dadurch das Verriegelungselement seine Entriegelungslage einnimmt. Hierdurch wird gewährleistet, dass ein Verriegeln des Rotors gegenüber dem Stator bei aufgesetztem Lenkrad nicht erfolgen kann.

Eine weitere vorteilhafte Ausgestaltung der Erfindung sieht vor, dass am Stator und/oder an einem mit dem Stator bewegungsgekoppelten Zwischenteil eine Verriegelungsaufnahme vorgesehen ist, in die das Verriegelungsende des Verriegelungselements in der Verriegelungslage zur Drehsicherung des Rotors gegenüber dem Stator eingreifen kann. Die Verriegelungsaufnahme erstreckt sich dabei in die Bewegungsrichtung des Verriegelungsende, in welches es beim Überführen des Verriegelungselements aus der Entriegelungslage in die Verriegelungslage bewegt wird. Vorteilhafterweise ist die Verriegelungsaufnahme direkt am Stator vorgesehen. Allerdings ist auch denkbar, dass die Verriegelungsaufnahme nicht direkt am Stator, sondern an einem mit dem Stator bewegungsgekoppelten Zwischenteil, insbesondere einem Ringelement, wie es aus der DE 10 2004 041 068 A1 vorbekannt ist, vorgesehen ist.

Besonders vorteilhaft ist, wenn die Zwangsführung des Verriegelungselements derart erfolgt, dass das Verriegelungsende und das Betätigungsende in der Verriegelungslage jeweils eine gegenüber dem Rotor erhabene Position und in der Entriegelungslage eine gegenüber dem Rotor zurückgezogene Position einnehmen. Wird folglich das Betätigungsende vom Lenkrad bei dessen Montage aus der erhabenen Position in die zurückgezogene Position gedrängt, so wird damit einhergehend das Verriegelungsende aus der erhabenen Position in die zurückgezogene Position verlagert. Folglich sind gerade in der Entriegelungslage das Betätigungsende und das Verriegelungsende vorteilhafterweise innerhalb des Rotors angesiedelt.

Die Zwangsführung kann insbesondere auf der dem Lenkrad zugewandten Seite einen parallel oder senkrecht zur Drehachse verlaufenden ersten Abschnitt aufweisen, wobei der Bogenabschnitt dem ersten Abschnitt nachgeordnet ist und wobei ein dem Bogenabschnitt nachgeordneter, dem Stator zugewandter parallel oder senkrecht zur Drehachse verlaufender Endschnitt vorgesehen ist.

Eine besonders bevorzugte Ausführungsform der Erfindung ergibt sich dann, wenn sich der Bogenabschnitt über 180° erstreckt und wenn der Bogenabschnitt zwischen dem ersten Abschnitt oder dem Endabschnitt einen spitz zulaufenden Winkel einschließt. Ferner kann vorgesehen sein, dass sich der Bogenabschnitt über lediglich 90° erstreckt und zwischen dem Bogenabschnitt und dem Endabschnitt ein weiterer, sich ebenfalls über 90° erstreckender Bogenabschnitt vorgesehen ist, der mit dem ersten Bogenabschnitt einen spitz zulaufenden Winkel einschließt. Die beschriebenen Ausführungsformen haben den Vorteil, dass beim Verlagern des Betätigungsendes aus einer erhabenen Position in eine zurückgezogene Position zeitgleich das Verriegelungsende ebenfalls aus einer erhabenen Position in eine zurückgezogene Position verlagert wird. Weitere Ausführungsformen, unter Verwendung von Bogenabschnitten, die sich über einen anderen Gradbereich erstrecken, sind ebenfalls denkbar.

Ein erfindungsgemäßes Lenkstockmodul kann ferner ein Federelement aufweisen, dass das Verriegelungselement in Richtung Verriegelungslage drängt. Hierdurch wird erreicht, dass beim Abnehmen des Lenkrades das Verriegelungselement aufgrund des Federelements selbsttätig in die Verriegelungslage gelangen kann.

Das Verriegelungselement als solches kann einen im Wesentlichen rechteckigen oder runden Querschnitt aufweisen, der geringfügig kleiner ist als der mit dem jeweiligen Querschnitt korrespondierende Querschnitt der Zwangsführung. Hierdurch wird gewährleistet, dass das Verriegelungselement weitgehend spielfrei in der Zwangsführung bewegt werden kann.

Zur Erreichung der biegeweichen Ausbildung des Verriegelungselements in dem Bereich, in dem es im Bogenabschnitt angeordnet ist, kann vorgesehen sein, dass das Verriegelungselement dort Materialaussparungen aufweist. Die Materialaussparungen können dabei an der Oberfläche des Verriegelungselements zur Erzielung einer filmscharnierartigen Ausbildung angeordnet sein. Hierdurch kann das Verriegelungselement insbesondere aus lediglich einem Werkstoff, insbesondere einem Kunststoff, ausgebildet werden, der durch Vorsehen geeigneter Materialaussparungen im Bogenabschnitt biegeweich ist. Durch Vorsehen der biegeweichen Ausbildung im Bereich des Bogenabschnitts wird gewährleistet, dass sich das Verriegelungselement in der Zwangsführung vergleichsweise leicht bewegen lässt, wobei dennoch über das Verriegelungselement Zug- und Druckkräfte übertragen werden können.

Eine weitere bevorzugte Ausführungsform der Erfindung sieht vor, dass die Zwangsführung von einer Aussparung in einem ringartig ausgebildeten Rotorgrundteil und einem in die Aussparung eingreifenden Führungsabschnitt eines auf dem Rotorgrundteil anordenbaren Rotordeckelteil gebildet wird. Bei der Montage des Lenkstockmoduls kann folglich dann das Verriegelungselement in die in insbesondere einer Axialrichtung offene Aussparung eingelegt werden. Daran anschließend kann die Aussparung durch den Führungsabschnitt des Rotordeckelteils zur Realisierung der Zwangsführung geschlossen werden.

Weitere Einzelheiten und vorteilhafte Ausgestaltungen der Erfindung sind der nachfolgenden Beschreibung zu entnehmen, anhand derer die in den Figuren gezeigten Ausführungsformen der Erfindung näher beschrieben und erläutert sind.

Es zeigen:
- Figur 1: eine perspektivische Ansicht auf einen Teilausschnitt eines Rotors und Stators eines erfindungsgemäßen Lenkstockmoduls;
- Figur 2: einen Schnitt durch eine zweite Ausführungsform; und
- Figur 3: einen Schnitt durch eine weitere Ausführungsform der Erfindung.

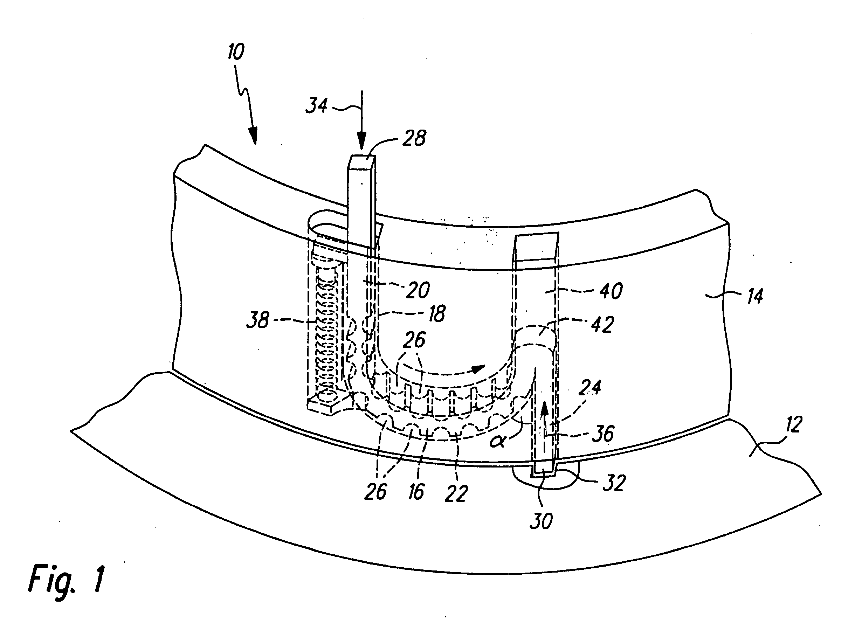

Das in der Figur 1 ausschnittsweise gezeigte Lenkstockmodul 10 umfasst einen an einem Lenkstock drehfest anordenbaren Stator 12 und einen gegenüber dem Stator 12 um eine Drehachse drehbar angeordneten Rotor 14. Zwischen dem Stator und dem Rotor sind beim Verdrehen des Rotors auf- beziehungsweise abwickelbare, kabelartig elektrische Verbindungsmittel, die in den Figuren nicht dargestellt sind, angeordnet. Zur Verriegelung des Rotors 14 gegenüber dem Stator, insbesondere bei nicht am Lenkstock angeordnetem Lenkstockmodul, ist ein Verriegelungselement 16 vorgesehen. Das Verriegelungselement 16 ist in einer kanalartigen Zwangsführung 18 am beziehungsweise im Rotor 14 zwangsgeführt angeordnet. Die Zwangsführung 18 umfasst, wie sie in Figur 1 gezeigt ist, auf der dem Stator 12 abgewandten und, im am Fahrzeug montierten Zustand des Lenkstockmoduls, dem Lenkrad zugewandten Seite einen parallel zur Drehachse des Rotors 14 verlaufenden ersten Abschnitt 20, einen sich daran anschließenden, sich über einen Bereich von 180° erstreckenden Bogenabschnitt 22 und einen sich an den Bogenabschnitt 22 anschließenden, parallel zum ersten Abschnitt 20 verlaufenden Endabschnitt 24. Der Endabschnitt 24 und der Bogenabschnitt 22 schließen dabei einen spitzen Winkel α ein. Der erste Abschnitt 20 geht tangential in den Bogenabschnitt 22 über. Das in der Zwangsführung 18 zwangsgeführte Verriegelungselement 16 ist wenigstens im Bereich des Bogenabschnitts 22 biegeelastisch ausgebildet. Dazu weist das Verriegelungselement 16 an den einander gegenüberliegenden Seiten parallel zueinander verlaufende Materialaussparungen 26 auf, wodurch sich eine filmscharnierartige Ausbildung ergibt. Das Verriegelungselement 16 weist ein dem Lenkrad zugewandtes Betätigungsende 28 und ein dem Stator zugewandtes Verriegelungsende 30 auf.

In der Figur 1, in der die Verriegelungslage des Verriegelungselements 16 dargestellt ist, greift das Verriegelungsende 30 in eine am Stator 12 vorgesehene Verriegelungsaussparung 32. Ein Verdrehen des Rotors 14 gegenüber dem Stator 12 wird dadurch ausgeschlossen.

Bei einer Montage des Lenkrades wird das Betätigungsende 28 vom Lenkrad in Richtung des Pfeils 34 nach axial unten bewegt. Zeitgleich wird das Verriegelungsende 30 aufgrund der beschriebenen Zwangsführung in Richtung des Pfeils 36 nach axial oben bewegt und rückt aus der Verriegelungsaussparung 32. Das Verriegelungselement 16 nimmt folglich seine Entriegelungslage ein und der Rotor 14 ist gegenüber dem Stator 12 drehbar.

Wie aus Figur 1 deutlich wird, ist ein Federelement 38 vorgesehen, das sich einerseits am Rotor 14 und anderseits am Verriegelungselement 16 derart abstützt, dass das Verriegelungselement 16 in die Verriegelungslage gedrängt wird. Hierdurch wird erreicht, dass beim Abnehmen des Lenkrades das Verriegelungselement 16 selbsttätig in seine Verriegelungslage gedrängt wird.

In axialer Verlängerung des Verriegelungsende 30 beziehungsweise des Endabschnitts 24 ist im Rotor 14 ein Hohlraum 40 vorgesehen. Beim Bewegen des Verriegelungselements in die Entriegelungslage kann der Übergangsbereich 42 zwischen dem biegeweichen Abschnitt des Verriegelungselements und dem Abschnitt des Verriegelungselements, der sich im Endabschnitt 24 der Zwangsführung befindet, eine Bewegung nach axial oben ermöglicht.

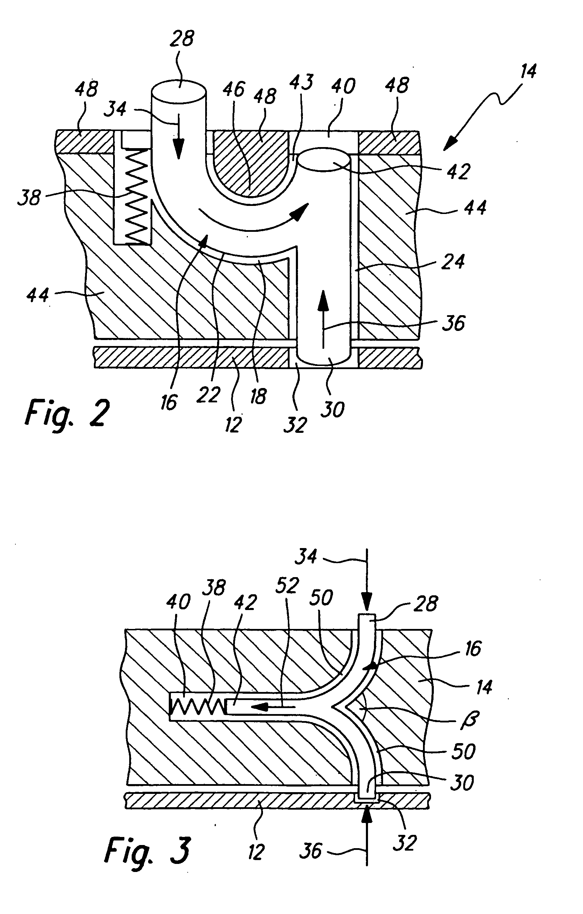

In der Figur 2 ist eine der Figur 1 entsprechende Ausführungsform im Schnitt durch den Rotor 14 und den Stator 12 gezeigt. Entsprechende Bauteile sind mit den entsprechenden Bezugszeichen versehen. Die Zwangsführung 18 wird hierbei von einer Aussparung 43 eines ringartig ausgebildeten Rotorgrundteils 44 und einem in die Aussparung 43 eingreifenden Führungsabschnitt 46 eines auf dem Rotorgrundteil 44 angeordneten Rotordeckelteil 48 gebildet. Durch eine derartige Ausbildung kann das Verriegelungselement 16 vergleichsweise einfach in die rotorseitige Aussparung 43 eingesetzt werden. Danach kann zur Bildung der Zwangsführung 18 das Rotordeckelteil 48 so aufgesetzt werden, dass der Führungsabschnitt 46 in die Aussparung 43 eingreift. Der Hohlraum 40 kann dabei insbesondere, wie in Figur 2 gezeigt wird, ebenfalls vom Rotordeckelteil 48 gebildet werden.

Der in Figur 3 gezeigte Schnitt entspricht im Wesentlichen dem Schnitt gemäß Figur 2, wobei entsprechende Bauteile mit entsprechenden Bezugszeichen versehen sind.

Bei der Ausführungsform gemäß Figur 3 weist die Zwangsführung 16 zwei Bogenabschnitte 50 auf, deren dem Betätigungsende 28 und dem Verriegelungsende 30 abgewandte Seiten einen spitzen Winkel β einschließen. Beim Beaufschlagen des Betätigungsende 28 in Richtung des Pfeils 34 mit dem Lenkrad wird folglich der Übergangsbereich 42 in Richtung des Pfeils 52 bewegt und das Verriegelungsende 30 in Richtung des Pfeils 36. Hierdurch gelangt das Verriegelungsende 30 aus der Verriegelungsaussparung 32 und ein Verdrehen des Rotors 14 gegenüber dem Stator 12 wird möglich. Bei der Ausführungsform gemäß Figur 3 kann das Federelement vorteilhafterweise im Hohlraum 40 angeordnet sein und das Verriegelungselement 16 im Übergangsbereich 42 angreifen.

Bei der in den Figuren dargestellten Ausführungsformen verläuft die Bewegungsrichtung der Betätigungsenden 28 und der Verriegelungsenden 30 parallel zur Drehachse des Rotors 14. Erfindungsgemäß ist dennoch denkbar, dass die Bewegungsrichtungen der Betätigungsenden 28 und/oder der Verriegelungsenden 30 auch radial zur Drehachse des Rotors 14 angeordnet sein können.

## Patentansprüche

1. Lenkstockmodul (10) mit einem drehfest anordenbaren Stator (12), mit einem gegenüber dem Stator (12) um eine Drehachse drehbar angeordneten, mit einem Lenkrad koppelbaren Rotor (14), mit kabelartigen elektrischen Verbindungsmitteln zwischen dem Rotor (14) und dem Stator (12), und mit einem aus einer Verrieglungslage in eine Entrieglungslage bringbaren Verriegelungselement (16) zur Verriegelung des Rotors (14) gegenüber dem Stator (12), **dadurch gekennzeichnet, dass** der Rotor (14) zur Zwangsführung des Verriegelungselement (16) eine kanalartige Zwangsführung (18) mit einen Bogenabschnitt (22, 50) aufweist und dass das zwangsgeführte Verriegelungselement (16) ein dem Lenkrad zugewandtes Betätigungsende (28) sowie ein dem Stator (12) zugewandtes Verriegelungsende (30) aufweist und wenigstens im Bereich des Bogenabschnitts (22, 50) biegeweich ausgebildet ist.

2. Lenkstockmodul (10) nach Anspruch 1, **dadurch gekennzeichnet, dass** die Zwangsführung (18) derart ausgebildet ist, dass bei mit dem Lenkrad gekoppeltem Rotor (14) das Betätigungsende (28) vom Lenkrad beaufschlagt und **dadurch** das Verrieglungselement (16) seine Entrieglungslage einnimmt.

3. Lenkstockmodul (10) nach Anspruch 1 oder 2, **dadurch gekennzeichnet, dass** am Stator (12) und/oder an einem mit dem Stator bewegungsgekoppelten Zwischenteil eine Verrieglungsaufnahme (32) vorgesehen ist, in die das Verriegelungsende (30) in der Verrieglungslage zur Drehsicherung eingreifen kann.

4. Lenkstockmodul (10) nach Anspruch 1, 2 oder 3, **dadurch gekennzeichnet, dass** das Verriegelungsende (30) und das Betätigungsende (28) in der Verrieglungslage jeweils eine gegenüber dem Rotor (14) erhabende Position und in der Entriegelungslage eine zurückgezogene Position einnehmen.

5. Lenkstockmodul (10) nach wenigstens einem der vorhergehenden Ansprüche, **dadurch gekennzeichnet, dass** die Zwangsführung (18) auf der dem Lenkrad zugewandten Seite einen parallel oder senkrecht zur Drehachse verlaufenden ersten Abschnitt (20) aufweist, dass der Bogenabschnitt (22, 50) dem ersten Abschnitt (20) nachgeordnet ist und dass ein dem Bogenabschnitt (22, 50) nachgeordneter, dem Stator (12) zugewandter parallel oder senkrecht zur Drehachse verlaufender Endabschnitt (24) vorgesehen ist.

6. Lenkstockmodul (10) nach Anspruch 5, **dadurch gekennzeichnet, dass** sich der Bogenabschnitt (22) über 180° erstreckt und dass der Bogenabschnitt (22) zwischen dem ersten Abschnitt (20) oder dem Endabschnitt (24) einen spitz zulaufenden Winkel (α) einschließt.

7. Lenkstockmodul (10) nach Anspruch 5, **dadurch gekennzeichnet, dass** sich der Bogenabschnitt (50) über 90° erstreckt und zwischen dem Bogenabschnitt (50) und dem Endabschnitt (24) ein weiterer sich ebenfalls über 90° erstreckender Bogenabschnitt (50) vorgesehen ist, der mit dem ersten Bogenabschnitt (50) einen spitz zulaufenden Winkel (β) einschließt.

8. Lenkstockmodul (10) nach wenigstens einem der vorhergehenden Ansprüche, **dadurch gekennzeichnet, dass** ein Federelement (38) vorgesehen ist, dass das Verrieglungselement (16) in Richtung Verrieglungslage drängt.

9. Lenkstockmodul (10) nach wenigstens einem der vorhergehenden Ansprüche, **dadurch gekennzeichnet, dass** das Verriegelungselement (16) einen im Wesentlichen rechteckigen oder runden Querschnitt aufweist, der geringfügig kleiner ist als der mit dem jeweiligen Querschnitt korrespondierende Querschnitt der Zwangsführung (18).

10. Lenkstockmodul (10) nach wenigstens einem der vorhergehenden Ansprüche, **dadurch gekennzeichnet, dass** das Verriegelungselement (16) in dem Bereich, in dem es biegeweich ausgebildet ist, Materialaussparungen (26) aufweist.

11. Lenkstockmodul (10) nach wenigstens einem der vorhergehenden Ansprüche, **dadurch gekennzeichnet, dass** die Zwangsführung (18) von einer Aussparung (43) in einem ringartig ausgebildeten Rotorgrundteil (44) und einem in die Aussparung (43) eingreifenden Führungsabschnitt (46) eines auf dem Rotorgrundteil (44) anordenbaren Rotordeckelteil (48) gebildet wird.

## Claims

1. Steering column module (10) having a stator (12) which can be arranged so as not to rotate, having a rotor (14) which can be coupled to a steering wheel and is arranged such that it can rotate with respect to the stator (12) about a rotational axis, having cable-like electrical connecting means between the rotor (14) and the stator (12), and having a locking element (16) which can be moved out of a locked position into an unlocked position, for locking the rotor (14) with respect to the stator (12), **characterized in that** the rotor (14) has a channel-like positive guide (18) with an arcuate section (22, 50) for the positive guidance of the locking element (16), and **in that** the positively guided locking element (16) has an actuating end (28) which faces the steering wheel and a locking end (30) which faces the stator (12), and is of pliable configuration at least in the region of the arcuate section (22, 50).

2. Steering column module (10) according to Claim 1, **characterized in that** the positive guide (18) is configured in such a way that, in the case of the rotor (14) being coupled to the steering wheel, the actuating end (28) is loaded by the steering wheel and the locking element (16) assumes its unlocked position as a result.

3. Steering column module (10) according to Claim 1 or 2, **characterized in that** a locking receptacle (32) is provided on the stator (12) and/or on an intermediate part which is movement-coupled to the stator, into which locking receptacle (32) the locking end (30) can engage in the locked position for rotational securing.

4. Steering column module (10) according to Claim 1, 2 or 3, **characterized in that** the locking end (30) and the actuating end (28) assume in each case an elevated position with respect to the rotor (14) in the locked position and a withdrawn position in the unlocked position.

5. Steering column module (10) according to at least one of the preceding claims, **characterized in that**, on the side which faces the steering wheel, the positive guide (18) has a first section (20) which extends parallel to or perpendicularly with respect to the rotational axis, **in that** the arcuate section (22, 50) is arranged behind the first section (20), and **in that** an end section (24) is provided which is arranged behind the arcuate section (22, 50), faces the stator (12) and extends parallel to or perpendicularly with respect to the rotational axis.

6. Steering column module according to Claim 5, **characterized in that** the arcuate section (22) extends over 180°, and **in that** the arcuate section (22) encloses an angle (α) which tapers to a point between the first section (20) or the end section (24).

7. Steering column module (10) according to Claim 5, **characterized in that** the arcuate section (50) extends over 90° and a further arcuate section (50) is provided between the arcuate section (50) and the end section (24), which further arcuate section (50) likewise extends over 90° and encloses an angle (β) which tapers to a point with the first arcuate section (50).

8. Steering column module (10) according to at least one of the preceding claims, **characterized in that** a spring element (38) is provided which displaces the locking element (16) in the direction of the locked position.

9. Steering column module (10) according to at least one of the preceding claims, **characterized in that** the locking element (16) has a substantially rectangular or round cross section which is slightly smaller than that cross section of the positive guide (18) which corresponds to the respective cross section.

10. Steering column module (10) according to at least one of the preceding claims, **characterized in that** the locking element (16) has material cut-outs (26) in the region in which it is of pliable configuration.

11. Steering column module (10) according to at least one of the preceding claims, **characterized in that** the positive guide (18) is formed by a cut-out (43) in a rotor base part (44) of ring-like configuration and a guide section (46), which engages into the cut-out (43), of a rotor cover part (48) which can be arranged on the rotor base part (44).

## Revendications

1. Module de colonne de direction (10) comprenant un stator (12) pouvant être disposé de manière fixe en rotation, avec un rotor (14) disposé de manière à pouvoir tourner autour d'un axe de rotation par rapport au stator (12), pouvant être accouplé à un volant de direction, avec des moyens de connexion électriques de type câble entre le rotor (14) et le stator (12), et avec un élément de verrouillage (16) pour le verrouillage du rotor (14) par rapport au stator (12), pouvant être amené hors d'une position de verrouillage dans une position de déverrouillage, **caractérisé en ce que** le rotor (14) présente, pour le guidage forcé de l'élément de verrouillage (16), un guidage forcé (18) de type canal avec une portion courbe (22, 50), et **en ce que** l'élément de verrouillage (16) guidé de manière forcée présente une extrémité d'actionnement (28) tournée vers le volant de direction ainsi qu'une extrémité de verrouillage (30) tournée vers le stator (12), et est réalisé au moins dans la région de la portion courbe (22, 50) de manière déformable en torsion.

2. Module de colonne de direction (10) selon la revendication 1, **caractérisé en ce que** le guidage forcé (18) est réalisé de telle sorte que lorsque le rotor (14) est accouplé au volant de direction, l'extrémité d'actionnement (28) soit sollicitée par le volant de direction et que de ce fait l'élément de verrouillage (16) adopte sa position de déverrouillage.

3. Module de colonne de direction (10) selon la revendication 1 ou 2, **caractérisé en ce que** l'on prévoit sur le stator (12) et/ou sur une partie intermédiaire accouplée de manière mobile au stator un logement de verrouillage (32) dans lequel l'extrémité de verrouillage (30) peut venir en prise dans la position de verrouillage en vue d'assurer la fixation en rotation.

4. Module de colonne de direction (10) selon la revendication 1, 2 ou 3, **caractérisé en ce que** l'extrémité de verrouillage (30) et l'extrémité d'actionnement (28) adoptent à chaque fois, dans la position de verrouillage, une position rehaussée par rapport au rotor (14) et dans la position de déverrouillage, une position rentrée.

5. Module de colonne de direction (10) selon au moins l'une quelconque des revendications précédentes, **caractérisé en ce que** le guidage forcé (18) présente du côté tourné vers le volant de direction une première portion (20) s'étendant parallèlement ou perpendiculairement à l'axe de rotation, **en ce que** la portion courbe (22, 50) est disposée après la première portion (20) et **en ce qu'**une portion d'extrémité (24) placée après la portion courbe (22, 50) est prévue, s'étendant vers le stator (12) parallèlement ou perpendiculairement à l'axe de rotation.

6. Module de colonne de direction (10) selon la revendication 5, **caractérisé en ce que** la portion courbe (22) s'étend sur 180° et **en ce que** la portion courbe (22) forme un angle aigu (α) entre la première portion (20) ou la portion d'extrémité (24).

7. Module de colonne de direction (10) selon la revendication 5, **caractérisé en ce que** la portion courbe (50) s'étend sur 90° et qu'une portion courbe (50) supplémentaire s'étendant également sur 90° est prévue entre la portion courbe (50) et la portion d'extrémité (24), laquelle forme avec la première portion courbe (50) un angle aigu (β).

8. Module de colonne de direction (10) selon au moins l'une quelconque des revendications précédentes, **caractérisé en ce qu'**il est prévu un élément de ressort (38) qui pousse l'élément de verrouillage (16) dans la direction de la position de verrouillage.

9. Module de colonne de direction (10) selon au moins l'une quelconque des revendications précédentes, **caractérisé en ce que** l'élément de verrouillage (16) présente une section transversale essentiellement rectangulaire ou ronde, qui est légèrement plus petite que la section transversale du guidage forcé (18) correspondant à la section transversale en question.

10. Module de colonne de direction (10) selon au moins l'une quelconque des revendications précédentes, **caractérisé en ce que** l'élément de verrouillage (16) présente des évidements de matériau (26) dans la région dans laquelle il est réalisé de manière déformable en torsion.

11. Module de colonne de direction (10) selon au moins l'une quelconque des revendications précédentes, **caractérisé en ce que** le guidage forcé (18) est formé par un évidement (43) dans une partie de base du rotor (44) réalisée sous forme annulaire et par une portion de guidage (46), venant en prise dans l'évidement (43), d'une partie de couvercle de rotor (48) pouvant être disposée sur la partie de base de rotor (44).
